**Europäisches Patentamt**

**European Patent Office**

**Office européen des brevets**

(19)

(11) Veröffentlichungsnummer: **0 255 866**
**A2**

(12) # EUROPÄISCHE PATENTANMELDUNG

(21) Anmeldenummer: **87109457.9**

(22) Anmeldetag: **01.07.87**

(51) Int. Cl.⁴: **C09J 7/02** , **C08L 23/12** ,
**//C08L23/08**

(30) Priorität: **23.07.86 DE 3624921**

(43) Veröffentlichungstag der Anmeldung:
**17.02.88 Patentblatt 88/07**

(84) Benannte Vertragsstaaten:
**AT BE CH DE ES FR GB IT LI NL SE**

(71) Anmelder: **Beiersdorf Aktiengesellschaft**
**Unnastrasse 48**
**D-2000 Hamburg 20(DE)**

(72) Erfinder: **Schmeer, Gert, Dipl.-Ing.**
**Tannweg 32a**
**D-8221 Bergen(DE)**
Erfinder: **Engelmann, Eberhard, Dr.**
**Lauterberger Weg 24**
**D-2000 Hamburg 61(DE)**
Erfinder: **Wulf, Gerhard**
**Gammeldamm 3**
**D-2390 Flensburg(DE)**

(54) **Klebeband.**

(57) Klebeband mit einem in überwiegend einer Richtung gereckten Trägermaterial, das mit mindestens einer druckempfindlichen oder heißsiegelbaren Klebeschicht versehen ist, wobei das Trägermaterial aus Polypropylen oder einem Polypropylencopolymeren mit einem Schlagzähzusatz aus LLDPE besteht.

EP 0 255 866 A2

## Klebeband

Bei der Erfindung handelt es sich um ein Klebeband mit einem überwiegend in einer Richtung gereckten Trägermaterial, das als Hauptkomponente Polypropylen oder ein Polypropylencopolymeres enthält.

Es ist seit langem bekannt, Trägermaterialien für Klebebänder, beispielsweise aus Polypropylen oder einem anderen Polyolefin, zur Erzielung spezieller Festigkeitseigenschaften in überwiegend einer Richtung zu recken. So beansprucht die DE-PS 21 04 817 eine Folie aus Polypropylencopolymerisat für die Herstellung von Klebebändern, die, um eine Festigkeit in Längsrichtung von größer 320 N/mm$^2$ zu erzielen, in Längsrichtung im Verhältnis 1:8 gereckt wird. In Querrichtung wird nicht gereckt.

Das Recken in überwiegend einer Richtung bedingt in Folge der dadurch erzielten bevorzugten Orientierung der fibrillären Kristallite eine entsprechende Veränderung der Eigenschaften senkrecht zur Reckrichtung. Besonders bei schlagartiger Belastung senkrecht zur Reckrichtung zeigt sich ein sehr leichtes Aufbrechen der Trägermaterialien in faserartige Strukturen. In der DE-PS 21 04 817 wird dieses Verhalten dadurch vermindert, daß Propylencopolymerisate mit Ethylen eingesetzt werden und durch verfahrenstechnische Maßnahmen ein Einspringen der Bahn beim Reckprozeß vermieden wird. Aus diesem Trägermaterial hergestellte Klebebänder sind z.B. als "Strapping Tape" (Umreifungsband) zu verwenden. Wenn jedoch vom Klebeband auch eine erhöhte Schlagzugzähigkeit in Querrichtung verlangt wird, wie z.B. beim Verpackungsklebeband, sind die so hergestellten Trägermaterialien unbrauchbar. Sie können jedoch durch den Zusatz von elastomerem Schlagzähzusatz verbessert werden. Hierbei handelt es sich um Thermoplaste, z.B. Butadien-Styrol-Elastomere, die in Mengen von 5 - 20 % in das Trägermaterial als diskrete, feindisperse Partikel eingebettet werden und in der verstreckten Matrix verhindern, daß bei Belastungen Spannungsspitzen auftreten (sh. z.B. Encyclopedia of Polymer Science 1967, Vol. 7, Seite 581). Verpackungsklebebänder aus solchem Trägermaterial sind z.B. als tesapack[R]125 der Beiersdorf AG, Hamburg auf dem Markt.

Durch Zusatz von EPM oder EPDM lassen sich bei derartigen, überwiegend in einer Richtung gereckten Trägermaterialien aus Polypropylen oder Polypropylencopolymeren nur unbedeutende Verbesserungen der Schlagzugzähigkeit senkrecht zur Reckrichtung erzielen. Offensichtlich löst sich dieser Zusatz in der Matrix und erhöht dort lediglich den amorphen Anteil.

Die Erhöhung der Schlagzugzähigkeit durch die feindisperse. Einbettung von Elastomeren in das Trägermaterial bringt jedoch auch Nachteile mit sich. Ungenügend fein dispergierte Teilchen wirken als Inhomogenität in der Matrix und erzeugen bei der Verstreckung bläschenartige Hohlräume. An diesen inhomogenen Stellen tritt bei schlagartiger Belastung in Querrichtung oder beim Abrollen des fertigen Klebebandes leicht ein Aufbrechen der Matrixstruktur ein. Der Elastomer-Zusatz führt außerdem zu einer erhöhten Lichtempfindlichkeit bzw. geringeren Alterungsbeständigkeit, da die Elastomer-Moleküle ungesättigte Bindungen enthalten. Weiterhin sind Trägermaterialien mit Elastomer-Zusatz lappig, während für die meisten Anwendungszwecke ein Trägermaterial mit einer gewissen Steifigkeit erwünscht ist.

Aufgabe der Erfindung ist es daher, Klebebänder mit einem Polypropylen-Trägermaterial zu schaffen, welches bei ausreichender Schlagzugzähigkeit senkrecht zur Haupt-Reckrichtung weniger zu Blasenbildung und ähnlichen Inhomogenitäten neigt und eine geringere Lichtempfindlichkeit zeigt. Dabei soll das eingesetzte Trägermaterial auch ohne Klebeschicht als Abdeck-oder Verpackungsmaterial verwendbar sein.

Es wurde nun überraschend gefunden, und darin liegt die Lösung dieser Aufgabe, daß sich ein Klebeband insbesondere mit guter Schlagzugzähigkeit, hervorragender Homogenität und Lichtbeständigkeit sowie anwendungsgerechter Steifigkeit herstellen läßt, wenn man ein überwiegend in einer Richtung gerecktes Trägermaterial aus Polypropylen oder einem Polypropylencopolymeren einsetzt, welches als Schlagzähzusatz nur LLDPE ("linear low density polyethylene") enthält und insbesondere frei von Elastomer-Zusätzen ist.

Mit derartigen Trägermaterialien lassen sich beispielswiese bei Verwendung von reinem Polypropylen und einer Reckung im Verhältnis 1:7 in Bahnrichtung Schlagzugzähigkeiten senkrecht zur Bahnrichtung von 100 -200 mJ/mm$^2$, bei Verwendung von Polypropylencopolymeren sogar von 300 - 600 mJ/mm$^2$ erreichen. Mit reinem Polypropylen bzw. dem entsprechenden Copolymeren allein ohne LLDPE werden dagegen unter gleichen Bedingungen nur Schlagzähigkeiten von 0 - 100 bzw. 50 - 200 mJ/mm$^2$ erzielt.

Gegenstand der Erfindung ist daher ein Klebeband mit einem überwiegend in einer Richtung gereckten Trägermaterial, das mit mindestens einer druckempfindlichen oder heißsiegelbaren Klebeschicht versehen ist, dadurch gekennzeichnet, daß das Trägermaterial aus Polypropylen oder einem Polypropylencopolymeren mit einem Schlagzähzusatz aus LLDPE besteht.

Dabei erfolgt die Reckung in der Haupt-Reckrichtung (Richtung, in die am stärksten gereckt wird), vorzugsweise mit einem Reckverhältnis von 1:4 bis 1:10.

Das Reckverhältnis gibt an, auf das Wievielfache der ursprünglichen Länge oder Breite der Träger durch den Reckvorgang verlängert oder verbreitert wird. Für den Ausdruck "Bahnrichtung" sind auch andere Formulierungen bekannt, beispielsweise: Längsrichtung, Maschinenlaufrichtung. Mit dem Begriff "senkrecht zur Bahnrichtung" ist die Senkrechte gemeint, die in der Bahnebene liegt.

Für das erfindungsgemäße Klebeband wird bevorzugt ein Trägermaterial verwendet, welches aus 75 - 95 Gew.-% Polypropylen oder einem Polypropylencopolymeren, sowie 5 - 25 Gew.-% LLDPE besteht. Besonders bevorzugt ist einer Trägermaterial aus 80 - 90 Gew.-% Polypropylen oder einem Polypropylencopolymeren und 10 - 20 Gew.-% LLDPE. Das verwendete Polypropylen ist vorzugsweise isotaktisches Polypropylen oder Polypropylen mit hohem isotaktischen Anteil (insbesondere ca. 95 %). Bei den einsetzbaren Polypropylencopolymeren handelt es sich vorzugsweise um statistische oder Blockcopolymere aus Propylen und Olefinen, wobei der Olefinanteil vorzugsweise bis zu 20% beträgt. Besonders bevorzugt werden Propylen-Ethylen-Copolymere eingesetzt, die bis zu 20 % Ethylen enthalten.

Bei LLDPE (linear low density polyethylene) handelt es sich um ein spezielles Polyäthylen mit einer Dichte von bis zu 0,935 g/ml, welches mit einem mindestens 3 C-Atome enthaltenden Alpha-Olefin, vorzugsweise 1-Buten oder 1-Octen, copolymerisiert wurde und im Gegensatz zu normalem LDPE (low density polyethylene) keine längeren Verzweigungen der Polymerketten aufweist, sondern lediglich durch die Seitenketten des Comonomers gebildete Kurzkettenverzweigungen (sh. L. Schwiegk: "LLDPE - ein neues Polyäthylen", Plastverarbeiter 33. Jahrgang 1982, Nr. 9, Seite 1035 - 1037).

Für das Trägermaterial gemäß der Erfindung wird in einer besonders bevorzugten Ausführungsform ein LLDPE eingesetzt, welches 1-Octen als Comonomer enthält.

Das Trägermaterial des erfindungsgemäßen Klebebandes, welches unter Verwendung üblicher, allgemein bekannter Verfahren hergestellt wird, kann ungeschäumt oder für spezielle Anwendungszwecke, zum Beispiel zur Erzielung spezieller Steifigkeiten oder Oberflächeneigenschaften, geschäumt sein, indem in an sich bekannter Weise dem Polymergemisch bei der Herstellung des Trägermaterials ein Treibmittel (Blähmittel) zugesetzt wird.

Die Dicke des verstreckten Trägermaterials (Folie) beträgt dabei bevorzugt 20 - 200 My m, insbesondere 30 - 150 My m für ungeschäumtes und bevorzugt 40 - 500 My m, insbesondere 50 bis 200 Mym für geschäumtes Trägermaterial.

Die Reckung kann erfindungsgemäß sowohl in Bahnrichtung als auch senkrecht zur Bahnrichtung sowie in beiden Richtungen erfolgen. In einer Ausführungsform der Erfindung wird beispielsweise ein ungeschäumtes Trägermaterial in Bahnrichtung, in einer anderen Ausführungsform ein geschäumtes Trägermaterial senkrecht zur Bahnrichtung gereckt. Bei Reckung in beiden Richtungen erfolgt diese bevorzugt so, daß in einer Richtung stärker gereckt wird als in der anderen. In einer speziellen Ausführungsform für geschäumtes Trägermaterial kann es insbesondere zweckmäßig sein, eine Reckung sowohl in Bahnrichtung als auch senkrecht zur Bahnrichtung vorzunehmen. Bevorzugt sind in diesem Falle Reckverhältnisse in Bahnrichtung von 1:2 bis 1:3 und senkrecht zur Bahnrichtung von 1:4 bis 1:6, besonders bevorzugt in der Weise, daß die Reckung senkrecht zur Bahnrichtung 2-bis 3-fach so stark vorgenommen wird wie in Bahnrichtung. Klebebänder gemäß dieser speziellen Ausführungsform der Erfindung eignen sich z.B. als verklebbare Tragegriffe oder als verklebbare Befestigungsstreifen, insbesondere für Höschenwindelverschlüsse, besonders vorteilhaft dann, wenn die benötigten Streifen in Querrichtung von einer Spenderrolle abgeschnitten werden sollen.

Zur Herstellung des Klebebandes wird auf das Trägermaterial mindestens einseitig eine an sich bekannte, druckempfindliche oder heißsiegelbare Klebemasse aufgebracht. Dies kann sowohl vollflächig, als auch nur teilweise geschehen (z.B. Streifenstrich, Siebdruck). Die Klebebandrückseite kann gleichfalls mit einer Klebemasse oder vorzugsweise mit einer klebstoffabweisenden Trennschicht versehen sein, z.B. wenn ein derartiges Klebeband in Form von Rollen konfektioniert werden soll. Um die Verankerung der Beschichtung zu verbessern, kann die Oberfläche der Trägermaterialien mit Methoden vorbehandelt werden, wie man sie üblicherweise für Polyolefin-Oberflächen anwendet. Beispielsweise können Verankerungsschichten aufgebracht werden.

Das klebmassefreie, ggf. ein-oder beidseitig mit einer klebstoffabweisenden Trennschicht versehene erfindungsgemäße Trägermaterial ist darüberhinaus geeignet zur Abdeckung von Selbstklebeschichten oder als Trennzwischenlage. Es kann auch als Abdeck-und Verpackungsmaterial verwendet werden. Daher ist das Trägermaterial gleichfalls Gegenstand der Erfindung.

Die nachfolgenden Beispiele sollen die Erfindung erläutern, ohne sie darauf zu beschränken. Dabei bedeuten die Abkürzungen GT Gewichtsteile, PE Polyethylen und PP Polypropylen. Die angegebenen Meßwerte für Zugfestigkeit und Bruchdehnung wurden gemäß DIN 53 455 bei 300 mm/min Prüfgeschwindigkeit ermittelt, die Werte für Schlagzugzähigkeit und Schlagzugarbeit gemäß DIN 53 448 und die Werte für die Biegesteifigkeit gemäß DIN 53 362.

Beispiel 1

85 GT handelsübliches vorwiegend isotaktisches PP-Blockcopolymerisat mit einem Ethylenanteil von ca. 5 % (Schmelzindex 213/2.16 : ca. 0.9 g / 10 min) mit 15 Gew.-TL handelsübliches LLDPE mit Octen als Comonomer (Schmelzindex 213/2.16 : ca. 3 g 10 min) werden als Granulat in einem Trommelmischer gut vorgemischt, und in üblicher Weise vermittels eines Extruders mit Breitschlitzdüse auf eine Kühlwalze extrudiert. Die dort in 1000 mm Breite und 280 My m Dicke entstandene Primärfolie wird einer Walzenreckvorrichtung zugeführt und dort bei Temperaturen zwischen 110°C und 155°C ohne Einspringen der Bahn in einem Verhältnis von 1:7 zu einer 40 My m starken Folie in Bahnrichtung gereckt. Reckung, Thermofixierung und ggf. ein-oder beidseitige Corona-oder Flammvorbehandlung erfolgen gemäß dem bekannten Stand der Technik.

Aus der so erhaltenen Folie wurde nach Kantenbeschnitt Klebeband gefertigt. Als Trennmittel wurde nach Coronavorbehandlung der Folienoberfläche Polyvinylstearylcarbamat in einer Beschichtungsstärke von 0,2 g m² (trocken) aus einer 3%igen Lösung in Toluol mit einer Rakel aufgetragen.

Der Klebstoff bestand aus

42 GT Styrol-Isopren-Blockcopolymerisat (SIS)

20 GT Pentaerythritester des hydrierten Kolophoniums 37 GT

37 GT aliphatischem Kohlenwasserstoffharz, Erweichungspunkt 85°C,

1 GT Zinkbutyldithiocarbamat.

Der Klebstoff wurde auf die coronavorbehandelte Folienoberfläche als 40%ige Lösung in Toluol mit anschließender Trocknung aufgetragen. Der Kleberauftrag betrug ca. 25 g/m². Auch der Auftrag aus der Schmelze ist möglich.

Auf die Verwendung einer speziellen Verankerungsschicht zwischen Träger und Klebstoff konnte verzichtet werden. Selbstverständlich sind die dem Stand der Technik entsprechenden Polypropylen-Primer einsetzbar.

Selbstverständlich können auch alle anderen bei Klebebändern üblichen Massetypen eingesetzt werden wie z.B.Naturkautschukmassen aus Lösemittel oder Dispersion, Acrylatmassen aus Lösemittel, Dispersion oder Schmelze.

Die mechanischen Daten der klebmassefreien Klebebandträgerfolie sind in Tab. 1 zusammengestellt.

Vergleichsbeispiel 2

Eine Folie wird in gleicher Weise wie in Beispiel (1) hergestellt. Dabei wird jedoch das beschriebene PP-Blockcopolymerisat ohne Zusatz allein verwendet.

Die Herstellung eines Klebebandes erfolgte in gleicher Weise wie im Beispiel (1).

Die mechanischen Daten der klebmassefreien Klebebandträgerfolien sind in der Tab. 1 mit aufgeführt.

Vergleichsbeispiel 3a

eine Folie wird in gleicher Weise wie in Beispeil (1) hergestellt. Dabei wird jedoch eine Mischung aus 90 GT des beschriebenen PP-Blockcopolymerisates und 10 GT eines Styrol-Butadien-Blockcopolymerisates mit einem Schmelzindex 230/2.16 von 5 - 10 g/10 min und einem Styrolgehalt von 50 % verwendet.

Die Herstellung eines Klebebandes erfolgte in gleicher Weise wie in Beispiel (1).

Die mechanischen Daten der klebmassefreien Klebandträgerfolie sind in Tab. 1 mit aufgeführt.

Vergleichsbeispiel 3b

Eine Folie wird in gleicher Weise wie in Beispiel (1) hergestellt. Dabei wird jedoch zunächst eine Mischung aus 50 GT Butadien-Styrol-Blockcopolymerisat, wie im Vergleichsbeispiel 3a angegeben, und 50 GT des beschriebenen PP-Blockcopolymerisates in einem Trommelmischer zubereitet, in einem Extruder im geschmolzenen Zustand innig durchgemischt, als Strang extrudiert und anschließend granuliert. Das Granulat wird in einem Verhältnis von 20 GT mit 80 GT PP-Blockcopolymerisat als Granulat in einem Trommelmischer gut vorgemischt und dann wie in den Beispielen 1 - 3a weiterverarbeitet.

Die Herstellung eines Klebebandes erfolgte in gleicher Weise wie in Beispiel (1).

Die mechanischen Daten der klebmassefreien Klebeband-Trägerfolie sind in Tab. 1 mit aufgeführt.


Beispiel 4

Ein Klebeband wird in gleicher Weise wie im Beispiel 1 angegeben hergestellt, mit dem Unterschied, daß zur Herstellung der Folie ein Gemisch von 85 GT PP-Homopolymerisat (Schmelzindex 213/2,16: ca. 0,9 g / 10 min) und 15 GT LLDPE eingesetzt wird. Die gemessenen mechanischen Daten der klebmassefreien Klebebandträgerfolie sind in Tab. 2 aufgeführt.


Vergleichsbeispiel 5

Ein Klebeband wird analog Beispiel 4 hergestellt, wobei zur Herstellung der Folie ein reines PP-Homopolymerisat gemäß Beispiel 4 ohne weitere Zusätze eingesetzt wird. Die mechanischen Daten analog Beispiel 4 sind in Tab. 2 aufgeführt.

Tabelle 1.

| | | Beispiel 1 | Vergleichs-beispiel 2 | Vergleichs-beispiel 3a | Vergleichs-Beispiel 3b |
|---|---|---|---|---|---|
| Dicke | My m | 40 | 40 | 40 | 40 |
| Zugfestigkeit in Bahnrichtung | $N/mm^2$ | 235 | 270 | 245 | 245 |
| Bruchdehnung in Bahnrichtung | % | 55 | 55 | 60 | 60 |
| Schlagzugzähigkeit in Bahnrichtung | $mJ/mm^2$ | 1800 | 1800 | 1900 | 1900 |
| Schlagzugarbeit senkr. zur Bahnr. | mJ/10mm | 120-240 | 30-60 | 60-240 | 160-400 |
| Schlagzugzähigkeit senkr. zur Bahnr. | $mJ/mm^2$ | 300-600 | 75-150 | 150-600 | 400-1000 |
| Schlagzugarbeit bei + $2^\circ$C senkr. z. Bahnr. | mJ/10 mm | 100-160 | <40 | 50-160 | 140-200 |
| Schlagzugzähigk. b. + $2^\circ$C senkr. zur Bahnr. | $mJ/mm^2$ | 250-400 | <100 | 125-400 | 350-500 |
| Schlagzugarbeit nach 300 h Xenotest**, senkr. z. Bahnr. | mJ/10 mm | 50-80 | <40 | <40 | <40 |
| Schlagzugzähigkeit nach 300 h Xenotest**, senkr. z. Bahnr. | $mJ/mm^2$ | 125-200 | <100 | <40 | <100 |
| Biegesteifigkeit | $cNcm^2$ | 0,35 | 0,35 | 0,25 | 0,25 |

**Filtereinstellung: Sonnenlicht im Freien

Wenn nicht anders angegeben, wurde bei $23^\circ$C und 55 % rel. F. gemessen.

## Tabelle 2

| | | Beispiel 4 | Vergleichs-beispiel 5 |
|---|---|---|---|
| Dicke | My m | 55 | 55 |
| Zugfestigkeit in Bahnrichtung | N/mm² | 350 | 370 |
| Bruchdehnung in Bahnrichtung | % | 40 | 40 |
| Schlagzugzähigkeit in Bahnrichtung | mJ/mm² | 1500 | 1400 |
| Schlagzugarbeit senkr. zur Bahnr. | mJ/10 mm | 70-95 | 35-50 |
| Schlagzugzähigkeit senkr. zur Bahnr. | mJ/mm² | 125-175 | 65-90 |

Wenn nicht anders angegeben, wurde bei 23° und 55 % rel. F. gemessen.

Beispiel 6

80 GT handelsübliches vorwiegend isotaktisches PP-Blockcopolymerisat mit einem Ethylenanteil von ca. 5% (Schmelzindex 213/2.16 ca. 0.9 g / 10 min ) 5 GT Polyethylen niedriger Dichte (Schmelzindex 190/5, 2-5 g / 10 min), 15 GT handelsübliches LLDPE mit Octen als Comonomer (Schmelzindex 213/2.16 ca. 3 g / 10 min) und 1.5 GT eines Treibmittels auf Basis Citronensäure/Natriumhydrogencarbonat (Hydrocerol) werden als Granulat in einem Trommelmischer gut vorgemischt und in üblicher Weise vermittels eines Extruders auf eine Kühlwalze extrudiert. Die dort entstandene Primärfolie wird in einer Walzenreckvorrichtung bei Temperaturen von 105 - 130°C im Verhältnis 1 : 2 zu einer 550 My m starken Folie von 400 mm Breite in Bahnrichtung gereckt. Anschließend wird die Materialbahn einem Breitstreckrah-

7

men zugeführt und bei Temperaturen von 135 - 160°C im Verhältnis 1 : 5,5 senkrecht zur Bahnrichtung gereckt. Die Dicke des erhaltenen Trägermaterials beträgt ca. 90 - 100 My m bei einer Dichte von 0,5 g / cm³. Reckung, Thermofixierung ggf. ein-oder beidseitige Corona-oder Flammvorbehandlung erfolgen gemäß bekanntem Stand der Technik.

Zur Herstellung von Klebebändern wird das beidseitig coronavorbehandelte Trägermaterial auf einer Seite z.B. mit einem handelsüblichen kondensationsvernetzendem Zweikomponenten-Silikontrennmittel versehen. Bezüglich des Klebmasseauftrages wurde wie in Beispiel (1) vorgegangen.

Auch alle anderen dort angeführten Klebemassebeschichtungen sind möglich.

Die mechanischen Daten der klebmassefreien Klebebandträgerfolie sind in Tab. 3 zusammengestellt.

Vergleichsbeispiel 7

Analog Beispiel 6 wird ein Klebeband mit einer Schaumfolie als Trägermaterial hergestellt, die kein LLDPE enthält und folgende Zusammensetzung aufweist:

90 GT PP/PE-Blockcopolymer

5 GT PE niedriger Dichte

5 GT Ethylen-Vinylacetat-Copolymerisat (Vinylacetatgehalt: 45 %)

1,5 GT Hydrocerol

Die Herstellung eines Klebebandes erfolgte in gleicher Weise wie in Beispiel (6).

Die mechanischen Daten der klebmassefreien Klebebandträgerfolie sind in Tab. 3 angegeben.

Vergleichsbeispiel 8:

Es wird ein Klebeband in gleicher Weise wie in Beispiel 6 beschrieben hergestellt. Dabei wird jedoch bei der Herstellung der geschäumten Trägerfolie die folgende Granulat-Mischung verwendet:

60 GT PP/PE-Blockcopolymer

5 GT PE niedriger dichte

5 GT Ethylen-Vinylacetat-Copolymerisat

1,5 GT Hydrocerol

30 GT Granulat aus 50 GT PP-Blockcopolymerisat und 50 GT Styrol-Butadien-Blockcopolymerisat, hergestellt wie in Vergleichsbeispiel (3b) beschrieben.

Die Herstellung eines Klebebandes erfolgte in gleicher Weise wie in Beispiel (6).

Die mechanischen Daten der klebmassefreien Klebebandträgerfolie sind in Tab. 3 angegeben.

Tabelle 3

| | | Beispiel 6 | Vergleichs- beispiel 7 | Vergleichs- beispiel 8 |
|---|---|---|---|---|
| Dicke | My m | 100 | 105 | 100 |
| Dichte | g/cm$^3$ | 0,52 | 0,53 | 0,50 |
| Zugfestigkeit | N/mm$^2$ | | | |
| - in Bahnrichtung | | 12 | 8 | 11 |
| - senkr. z. Bahnrichtung | | 50 | 60 | 50 |
| Bruchdehnung | % | | | |
| - in Bahnrichtung | | 50 | 25 | 45 |
| - senkr. z. Bahnrichtung | | 15 | 15 | 15 |
| Schlagzugarbeit | mJ/10 mm | | | |
| - in Bahnrichtung | | 55-65 | 40-47 | 45-60 |
| Schlagzugzähigkeit | mJ/mm$^2$ | | | |
| - in Bahnrichtung | | 55-65 | 38-45 | 45-60 |
| Schlagzugzähigkeit | mJ/mm$^2$ | | | |
| - senkr. z. Bahnrichtung | | 180 | 200 | 180 |

Die Bedeutung der Erfindung soll zunächst anhand der Tab. 1 diskutiert werden:

0 255 866

Schlagzugarbeitswerte senkrecht zur Bahnrichtung <40 mJ/10 mm Probenbreite zeigen eine zu geringe Widerstandsfähigkeit des Trägermaterials in dieser Richtung gegen Belastungen mit hoher Deformationsgeschwindigkeit an. Längsgereckte Trägermaterialien brechen z.B. leicht in Bahnrichtung auf ("Spleißen") wenn die Schlagzugarbeit senkrecht zur Bahnrichtung diesen Wert unterschreitet. Das kann während der Klebebandproduktion beim Abrollen, Beschichten oder Schneiden erfolgen oder später beim Verarbeiten des Klebebandes beim Anwender. Unterhalb dieses Wertes ist auch keine Verschlußsicherheit mehr mit dem Klebeband gewährleistet, wenn es, wie vielfach üblich, in Längsrichtung über eine Kartonverschlußfuge verklebt wird.

In den Tabellen 1 und 2 sind deshalb auch die Werte der Schlagzugarbeit senkrecht zur Bahnrichtung angegeben, wie sie an Proben von 10 mm Breite und der jeweiligen Probendicke gemessen worden sind, um daraus die dickenunabhängigen Werkstoffkenndaten der Schlagzugzähigkeit in mJ/mm$^2$ zu erhalten.

Im Vergleichsbeispiel (2) wird eine 40 Mym-Folie erzeugt, die bezüglich der Schlagzugarbeit senkrecht zur Bahnrichtung im kritischen Bereich liegt. Mit dem erfindungsgemäßen Beispiel (1) wird hingegen eine Folie hergestellt, die auch noch bei +2°C und nach 300 Stunden Xenotestbelichtung verarbeitungs-und anwendungstechnisch in einem einwandfreien Bereich liegt.

Es ist also auf diese Weise möglich, ein 40 Mym dickes Verpackungsklebeband zu erzeugen, das allen Anforderungen der Praxis genügt.

Das gem. Beispiel (3a) schlagzäh gemachte Trägermaterial ist dem erfindungsgemäßen Trägermaterial gem. Beispiel (1) unterlegen, weil bei der Schlagzugzähigkeit bzw. Schlagzugarbeit senkrecht zur Bahnrichtung niedrigere Werte auftreten. Die disperse Phase des Schlagzähzusatzes wird bei dieser üblichen Form der Einarbeitung nicht gleichmäßig genug verteilt, so daß an zahlreichen Stellen der Folie starke Inhomogenitäten und Bläschen auftreten, die diese niedrigen Werte verursachen.

Erst durch eine dem Mischen vorhergehende zusätzliche Extrusion des Schlagzähzusatzes mit einem Teil des verwendeten PP-Blockcopolymerisats, anschließende Granulierung und Einmischung des Granulates in den Rest des PP-Blockcopolymerisats lassen sich die Werte des Vergleichsbeispiels (3b) erzielen.

Auch diese Folie des Beipiels (3b) läßt unter dem Mikroskop noch pro mm$^2$ ca. 50 - 100 kleine Bläschen erkennen, die in Bahnrichtung eine Ausdehnung von 50 - 200 Mym und senkrecht zur Bahnrichtung eine Ausdehnung von 5 - 30 Mym sowie eine Höhe von schätzungsweise 1 - 2 Mym aufweisen. Im Zentrum dieser Bläschen, deren Form durch die Längsreckung des Trägermaterials entstanden ist, liegt ein Elastomerpartikel, das bei dem Reckvorgang seine Verbindung zur Matrix verloren hat. Der überwiegende und tatsächlich "wirksame" Anteil des feindispersen Schlagzähzusatzes liegt dagegen in Partikeln von 0,2 bis 3 Mym Länge und 0,1 bis 0,3 Mym Breite fest eingebettet in die verstreckte Matrix des Trägermaterials vor.

Die beschriebenen Bläschen stellen, da sie zum Teil auch unmittelbar in der Oberfläche der Folie liegen, für ein Klebeband eine ernste Gefahr dar. Wenn nicht eine sehr gute Trennbeschichtung auf die Folie aufgebracht wird, reißen die Folien beim Abwickeln des Klebebandes an dieser Stelle leicht auf. Das Bläschen selbst erschwert aber grade an dieser Stelle die sichere Ausbildung einer guten Trennschicht. Bei der Herstellung eines solchen Klebebandes ist insofern sowohl bei der Herstellung des Trägermaterials als auch bei der Beschichtung ein erhöhter Aufwand zur Qualitätssicherung notwendig, bzw. eine erhöhte Verlustmenge unumgänglich.

Das erfindungsgemäße Trägermaterial gemäß Beispiel (1) erweist sich dagegen bei mikroskopischer Betrachtung als ein homogenes Kristallitgefüge ohne Bläschen und Inhomogenitäten. Das resultiert aus der völligen Verträglichkeit des LLDPE mit dem nicht-kristallinen Anteil der PP-Matrix, in der die Kristallite eingebettet sind.

Die Oberfläche der Folie gem. diesem Beispiel (1) ist frei von Bläschen und läßt eine problemlose Beschichtung und Ausbildung einer einwandfreien Trennschicht zu. Eine derartige Folie zeigt sowohl bei der Herstellung als auch bei der Beschichtung eine erhöhte Produktionssicherheit gegenüber Beispiel (3b).

Die erfindungsgemäßen Klebebänder gem. Beispiel (1) sind aus diesem Grunde und außerdem von den Rohstoffkosten her wirtschaftlicher und von der Produktionssicherheit her problemloser herzustellen als Klebebänder gem. den Vergleichsbeispielen (3a) und (3b). Für ein dünnes Verpackungsklebeband ist darüber hinaus die höhere Biegesteifigkeit des erfindungsgemäßen Klebebandes gegenüber den Vergleichsbeispielen (3a) und (3b) von großem Vorteil bei automatischer Verarbeitung. Unter Berücksichtigung aller Aspekte stellt das erfindungsgemäße Klebeband somit einen echten Fortschritt dar.

Im Beispiel (4) der Tabelle 2 wurde das Prinzip der Erfindung bei einem längsgereckten Trägermaterial aus PP-Homopolymerisat angewandt. Die im Beispiel 55 Mym dicke Folie wird durch den erfindungsgemäßen Schlagzähzusatz in der Schlagzugarbeit senkrecht zur Bahnrichtung auf Werte angehoben, die eine problemlose Beschichtung und Anwendung des Klebebandes als "Strapping Tape" (Umreifungsklebeband) gewährleisten. Ein Klebeband gem. Vergleichsbeispiel (5) ohne den erfindungsgemäßen Zusatz liegt dagegen von vornherein in dem kritischen Bereich der Schlagzugarbeit senkrecht zur Bahnrichtung und ist daher nur bedingt einsetzbar. Auch bei dieser Kombination des LLDPE mit einem PP-Homopolymerisat zeigt sich die problemlose Verarbeitbarkeit der erfindungsgemäßen Rohstoffkombination.

Das Beispiel (6) der Tabelle 3 belegt die Brauchbarkeit des Prinzips der Erfindung bei vorwiegend quergereckten, geschäumten PP-Folien als Trägermaterialien für Klebebänder.

Um quergereckte Folien überhaupt abwickeln und verarbeiten zu können, muß die Schlagzugarbeit in Bahnrichtung mindestens 50 mJ/10 mm Probenbreite betragen. Anderenfalls tritt ein dauerndes Abreißen der Bahn beim Lauf durch die Beschichtungsmaschine und bei der Verarbeitung der fertigen Klebebandrolle auf. Mit dem erfindungsgemäßen Trägermaterial des Beispiels (6) wird diesbezüglich ein mindestens gleich gutes Verhalten wie im Vergleichsbeispiel (8), bei dem mit hohem Aufwand ein Butadien-Styrol-Schlagzähzusatz feindispers eingemischt wurde, und ein deutlich besseres Verhalten als im Vergleichsbeispiel (7) ohne diesen Zusatz erzielt. Die Vorteile eines homogenen schlagzähen Ausgangsmaterials sind beim Schäumen und anschließenden Recken der geschäumten Folie von noch größerem Nutzen als bei der Verstreckung einer ungeschäumten Folie, so daß sich hier die Vorteile der großen Produktionssicherheit besonders stark bemerkbar machen.

## Ansprüche

1. Klebeband mit einem in überwiegend einer Richtung gereckten Trägermaterial, das mit mindestens einer druckempfindlichen oder heißsiegelbaren Klebeschicht versehen ist, dadurch gekennzeichnet, daß das Trägermaterial aus Polypropylen oder einem Polypropylencopolymeren mit einem Schlagzähzusatz aus LLDPE besteht.

2. Klebeband gemäß Anspruch 1, dadurch gekennzeichnet, daß die Reckung in Haupt-Reckrichtung mit einem Reckverhältnis von 1:4 bis 1:10 erfolgt.

3. Klebeband gemäß Anspruch 1, dadurch gekennzeichnet, daß das Trägermaterial aus einem Gemisch aus 75 - 95 Gew.-% Polypropylen bzw. einem Polypropylencopolymeren und 5 - 25 Gew.-% LLDPE besteht.

4. Klebeband gemäß Anspruch 1, dadurch gekennzeichnet, daß das Trägermaterial zusätzlich geschäumt ist.

5. Klebeband gem. Anspruch 1, dadurch gekennzeichnet, daß das Trägermaterial ungeschäumt ist und eine Dicke von 20 - 200 My m aufweist.

6. Klebeband gemäß Anspruch 1, dadurch gekennzeichnet, daß das Trägermaterial geschäumt ist und eine Dicke von 40 - 500 My m aufweist.

7. Klebeband gem. Anspruch 1, dadurch gekennzeichnet, daß das LLDPE ein alpha-Olefin mit mindestens 3 C-Atomen als Comonomer enthält.

8. Klebeband gemäß Anspruch 1, dadurch gekennzeichnet, daß das LLDPE 1-Octen als Comonomer enthält.

9. Mit mindestens einer klebstoffabweisenden Trennschicht versehenes Trägermaterial gemäß Anspruch 1.

10. Beschichtungsfreies Trägermaterial gemäß den Ansprüchen 1 - 9.